# EUROPÄISCHE PATENTSCHRIFT

(11) **EP 0 620 390 B1**
(45) Veröffentlichungstag und Bekanntmachung des Hinweises auf die Patenterteilung: **27.08.1997**
(21) Anmeldenummer: 94104060.2
(22) Anmeldetag: 16.03.1994
(51) Int. Cl.: F16J 15/02

(54) **Dichtring grösseren Durchmessers aus einem Elastomer-Werkstoff**
Elastomeric seal ring for large diameter
Bague d'étanchéité pour grand diamètre en matière élastomère

(30) Priorität: 14.04.1993 LU 88247
(43) Veröffentlichungstag der Anmeldung: 19.10.1994
(73) Patentinhaber: PAUL WURTH S.A., 1122 Luxembourg (LU)
(72) Erfinder: Speaight, Théodor, L-9366 Ernsdorf (LU); Lonardi, Emile, L-4945 Bascharage (LU); Cimenti, Giovanni, L-5825 Fentange (LU)
(74) Vertreter: Freylinger, Ernest T.

(56) Entgegenhaltungen:
- DE-A- 2 551 360
- FR-A- 1 464 445
- US-A- 3 396 712

## Beschreibung

Die Erfindung betrifft einen Dichtring größeren Durchmessers aus einem Elastomer-Werkstoff für die Montage in einen ringförmigen, nach einer Seite offenen Kanal, der eine Bodenfläche und zwei sich in radialer Richtung gegenüberliegende Seitenflächen als Umgrenzungsfläche aufweist, wobei der Dichtring annähernd denselben Querschnitt wie der Kanal hat und eine freiliegende Dichtfläche aufweist, die beim montierten Dichtring der offenen Seite des Kanals zugekehrt ist und annähernd senkrecht, durch einen Dichtwulst flächig belastbar ist.

Dichtringe der eingangs beschriebenen Art werden zum Beispiel bei größeren, gasdichten Klappen eingesetzt. Solche Klappen haben, zum Beispiel im Hochofenbau, einen Durchmesser von 0,5 bis 2 Meter oder mehr und sind wesentlichen Anpreßdrücken ausgesetzt.

In der Praxis hat man festgestellt, daß bei diesen Dichtringen größeren Durchmessers, schon nach relativ wenigen Belastungszykeln Risse in der Oberfläche auftreten können. Diese Risse sind insbesondere im Kanal in den Zonen zwischen Bodenfläche und Seitenflächen und in der freiliegenden Dichtfläche lokalisiert.

Aufgabe der Erfindung ist es, die Geometrie des Dichtrings so zu verbessern, daß diese bisher unerklärbaren Risse weitgehend vermieden werden.

Dieses Ziel wird dadurch erreicht, daß der Querschnitt des Dichtrings gegenüber dem Querschnitt des Kanals so abgeändert ist, daß er einen zentralen Fuß ausbildet der an die Bodenfläche des Kanals anliegend ist und der radial durch zwei konkave Einbuchtungen in den Dichtring begrenzt wird, wobei diese konkaven Einbuchtungen sich in radialer Richtung jeweils von der Bodenfläche bis zu einer der beiden Seitenflächen des Kanals erstrecken und derart bemessen sind, daß sie mit den entsprechenden Umgrenzungsflächen des Kanals jeweils einen Hohlraum im Kanal ausbilden, in welchen ein wesentlicher Teil des Elastomer-Werkstoffs bei Belastung der freiliegenden Dichtfläche ausweichen kann, ohne daß dabei die konkave Ausbildung der Einbuchtungen wesentlich verändert wird.

Aufwendige Berechnungen des Dichtrings nach der Methode der Finiten Elemente haben nämlich gezeigt, daß erhöhte Spannungen an den vorgenannten Zonen mit Rißbildung hauptsächlich dann auftreten, wenn der Dichtring bei entsprechender Belastung der freiliegenden Dichtfläche im Kanal eingeengt ist. Durch die Erfindung wird erreicht, daß der Elastomer-Werkstoff in Belastungsrichtung in den Kanal ausweichen kann. Dadurch wird die Spannungsverteilung in dem Querschnitt des Dichtrings sehr günstig beeinflußt. Es wurde zum Beispiel berechnet, daß die Spannungen an den kritischen Stellen bis zu 50 % und mehr, durch eine erfindungsgemäße Abänderung des Dichtringquerschnitts, erzielt werden konnten.

Zwar war allgemein bekannt, daß ein Elastomer-Werkstoff, als gummielastischer Körper, nicht kompressibel ist und daher Platz zum Ausdehnen braucht. Diesem Umstand wurde, entsprechend dem Stand der Technik, jedoch nur dadurch Rechnung getragen, daß der Dichtring derart dimensioniert wurde, daß er mit radialem Spiel in den Kanal eingebaut werden konnte. Der Dichtring konnte sich also seitlich, das heißt, rechtwinklig zur Belastungsrichtung ausdehnen. Diese Vorkehrung ist aus den folgenden Gründen jedoch nicht ausreichend, um die eingangs erwähnte Rißbildung zu vermeiden. Erstens bedingt die seitliche Ausdehnung des Dichtrings eine ungünstige Spannungsverteilung, da zum Beispiel bedeutende Scherkräfte zwischen der Bodenfläche des Kanals und dem Dichtring auftreten. Zweitens hat es sich in der Praxis erwiesen, daß Maßfehler bei Dichtringen über 1 Meter, meistens größer als das berechnete Spiel zwischen Dichtring und Kanal sind. Deshalb kommt es des öfteren, besonders bei Dichtringen mit größerem Durchmesser vor, daß der Dichtring im unbelasteten Zustand, nicht die Position in dem Kanal einnimmt, die ihm eine spannungsentlastende Ausdehnung erlaubt. Drittens ist es nicht ausgeschlossen, daß das radiale Spiel zwischen dem Kanal und dem Dichtring dadurch verloren geht, daß der Sitz mit dem Kanal sich verformt, oder daß bei der Montage Verunreinigungen in den Kanal gelangen. Alle diese Nachteile werden durch die vorliegende Erfindung weitgehend beseitigt.

Durch den zentralen Fuß, der an der Bodenfläche des Kanals anliegend ist, wird die freiliegende Dichtfläche auf die Bodenfläche in Belastungsrichtung abgestützt. Damit wird verhindert, daß bei Belastung der freiliegenden Dichtfläche, dieselbe zu stark in Belastungsrichtung nachgibt. Ein zu starkes Nachgeben der freiliegenden Dichtfläche in Belastungsrichtung ist nämlich nicht erwünscht, da hierdurch Zugspannungen in der Dichtfläche entstehen, welche wiederum zu Rißbildungen führen können.

Zwecks weiterer Erklärung der Erfindung ist ebenfalls anzumerken, daß es nicht genügt die Kannten des Dichtrings leicht abzuschrägen oder abzurunden, wie das zum Beispiel systematisch bei metallischen Paßteilen erfolgt, um lokale Spannungen zu vermeiden. Im Sinne der Erfindung sollte vielmehr die umlaufenden Hohlräume eine großzügig ausgelegte, radiale Ausdehnung und ein nicht zu gering bemessenes Volumen aufweisen, um tatsächlich einen wesentlichen Teil des, durch die Belastung der freiliegenden Dichtfläche verdrängten, Elastomer-Werkstoffs aufnehmen zu können. Um Zugspannungen zu vermeiden, welche zu Rißbildung im Bereich der Einbuchtungen führen können, sind diese Einbuchtungen konkav ausgebildet und so bemessen, daß diese konkave Form auch nach Belastung der freiliegenden Dichtfläche bestehen bleibt. Anhand dieser Erklärungen sind die optimalen Abmessungen durch den Fachmann für jeden speziellen Belastungsfall, zum Beispiel nach der Methode der Finiten Elemente, mit einem Rechenprogramm ohne weitere erfinderische Tätigkeit zu bestimmen.

Als vorteilhaft hat es sich dabei erwiesen, die Einbuchtungen kreisbogenförmig auszubilden. Weiterhin ist es vorteilhaft wenn, im unbelasteten Zustand, der Dichtring sich im rechten Winkel von der Bodenfläche des Kanals abhebt, die jeweilige konkave Einbuchtung ausbildet und sich auch im rechten Winkel wieder in Richtung der Seitenfläche des Kanals erstreckt.

Die freiliegende Dichtfläche ist vorteilhaft als konvexe Fläche ausgebildet welche eine ebene Scheitelfläche als Kontaktfläche für den Dichtwulst aufweist. Bei Belastung durch den Dichtwulst soll die Dichtfläche ihre Form nur unwesentlich verändern. Dadurch wird die Spannungsverteilung noch weiter optimiert, und es werden vor allem Zugspannungen weitgehend vermieden.

Ein Ausführungsbeispiel der Erfindung wird anhand der beigefügten Zeichnungen erläutert. Es zeigt :
- Figur 1: im linken Teil einen Schnitt durch einen bekannten Dichtring, wie er zum Beispiel in einem Sitz einer gasdichten Klappe größeren Durchmessers eingebaut ist, und im rechten Teil eine Draufsicht auf den bekannten Dichtring;
- Figur 2: im Querschnitt eine erfindungsgemäße Ausführung des Dichtrings;
- Figur 3: eine Ausführung des Dichtrings die kaum zufriedenstellende Resultate ergibt.

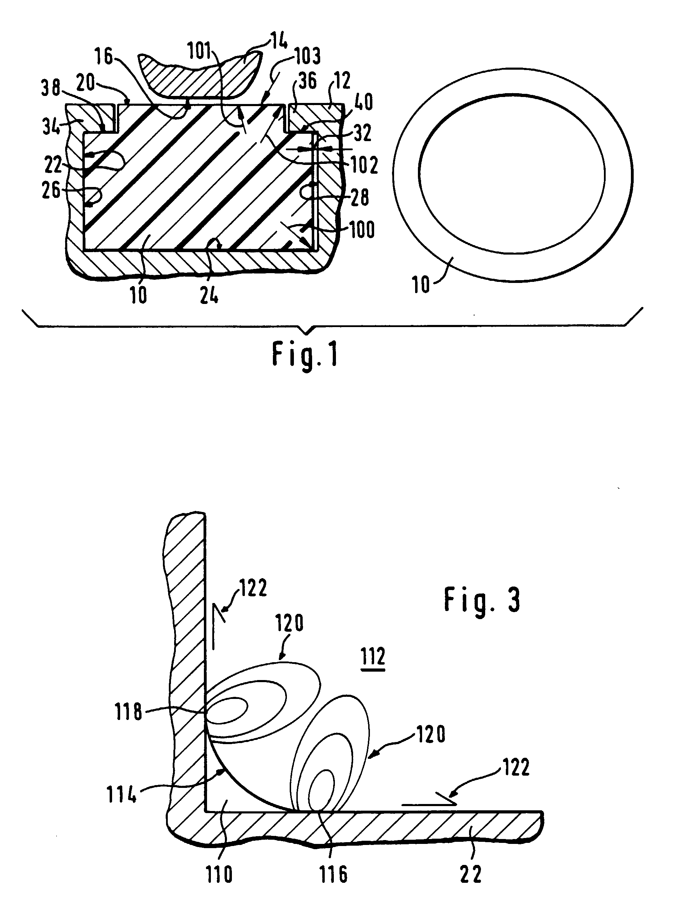

Figur 1 zeigt einen Dichtring 10 aus einem Elastomer-Werkstoff, der zum Beispiel in den Sitz 12 einer gasdichten Hochofenklappe eingebaut sein kann. Die Schließklappe ist dabei durch einen Dichtwulst 14 dargestellt, der eine ebene Dichtfläche 16 aufweist. Mit dieser ebenen Dichtfläche 16, wird der Dichtwulst 14 mit hohem Anpreßdruck gegen eine freiliegende Dichtfläche 20 des Dichtrings 10 gepreßt, wobei dieser, annähernd senkrecht, flächig belastet wird. Der Dichtring 10 ist in einen ringförmigen, in Richtung zum Dichtwulst 14 offenen, Kanal 22 eingebaut. Dieser Kanal 22 weist eine ebene, ringförmige Bodenfläche 24 und zwei koaxiale, zylindrische Seitenflächen 26, 28 auf. Diese Umgrenzungsflächen 24, 26, 28 definieren einen rechteckigen Kanalquerschnitt.

Beim Dichtring 10, welcher in Figur 1 gezeigt ist, handelt es sich um einen Dichtring dessen Geometrie noch nicht entsprechend der Erfindung abgeändert wurde. Sein Querschnitt stimmt im wesentlichen mit dem Querschnitt des Kanals 22 überein. Seine Breite ist im Idealfall jedoch leicht kleiner als die Breite des Kanals 22, so daß sich, zumindest im unbelasteten Zustand, ein radiales Spiel 32 zwischen dem Dichtring 10 und dem Kanal 22 ergibt. Der Dichtring 10 wird durch die beiden radialen Vorsprünge 34, 36, welche jeweils mit einer Schulter 38, 40 des Dichtrings 10 zusammenwirken, in dem Kanal 22 festgehalten.

In der Figur 1 sind durch die Pfeile 100, 101, 102 und 103 diejenigen Stellen angegeben, wo am häufigsten Risse auftraten. Bei 100 traten hauptsächlich Risse in Umfangrichtung auf, unabhängig vom Zustand der freiliegenden Dichtfläche 20. Bei 101 und 102 traten Risse mehr oder weniger in Umfangrichtung um den Dichtwulst 14, bzw. um den Sitz 12 auf. Bei 103 gab es besonders starke Risse in der Fläche direkt neben dem Dichtwulst 14.

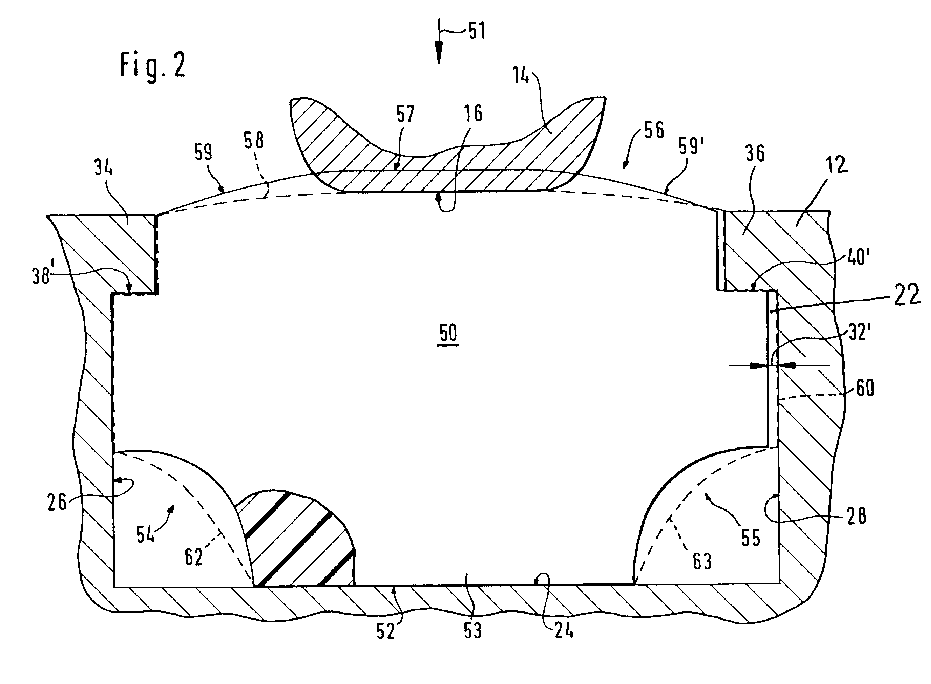

In Figur 2 ist ein Ausführungsbeispiel des, entsprechend der Erfindung, abgeänderten Dichtrings im Querschnitt gezeigt. Dabei ist der Querschnitt im unbelasteten Zustand mit einer durchgezogenen Linie und im belasteten Zustand mit einer gestrichelten Linie dargestellt. Der Dichtring 50 ist mit radialem Spiel 32' in den vorbeschriebenen Kanal 12 eingebaut und wird, wie vorbeschrieben, durch den Dichtwulst 14 belastet. Die Belastungsrichtung ist durch den Pfeil 51 angegeben.

Der in Figur 2 gezeigte Dichtring 50 unterscheidet sich vom bekannten Dichtring 10 der Figur 1 dadurch, daß er in einer Oberfläche 52, welche der Bodenfläche 24 des Kanals 22 gegenüberliegt, zwei konkave, das heißt nach innen gewölbte, symmetrisch angeordnete Einbuchtungen 54, 55 aufweist, und daß seine freiliegende Dichtfläche 56 als konvexe, das heißt nach außen gewölbte Fläche ausgebildet ist. Die Einbuchtungen 54, 55 sind vorteilhaft kreisbogenförmig ausgebildet. Im unbelasteten Zustand hebt sich der Dichtring jeweils rechtwinklig von der Bodenfläche 24 ab, bildet die jeweilige kreisbogenförmige Einbuchtung 54, 55 aus, und erstreckt sich wieder rechtwinklig in Richtung der entsprechenden Seitenfläche 26, 28 des Kanals 22. Die Einbuchtungen 54, 55 bilden somit zwei ringförmige Hohlräume im Kanal 22 aus, und überspannen dieselben bogenförmig zwischen Bodenfläche 24 und der entsprechenden Seitenfläche 26, 28. Zwischen diesen beiden ringförmigen Hohlräumen 54, 55 bildet der Dichtring 50 einen Fuß 53 aus, welcher mit seiner Oberfläche 52 auf der Bodenfläche 24 des Kanals 22 aufliegt.

Die freiliegende konvexe Dichtfläche 56 weist vorteilhaft eine im wesentlichen ebene Scheitelfläche 57 als Kontaktfläche für die ebene Dichtfläche 16 des Dichtwulst 14 auf. Scheitelfläche 57 und Dichtfläche 16 haben dabei annähernd die gleichen Ausdehnungen. Zwei konvex gewölbte Anschlußflächen 59, 59' umgeben ringförmig die im wesentlichen ebene Scheitelfläche 57.

Bei Belastung der freiliegenden Dichtfläche 56, durch den Dichtwulst 14, verformt sich dieselbe, um die durch die gestrichelte Linie 58 dargestellte Form anzunehmen. Auch nach Verformung durch den Dichtwulst 14 hat die Dichtfläche 56 noch eine konvexe Form. Der Elastomer-Werkstoff reagiert auf die Kompression durch den Dichtwulst 14, indem er sich wie bisher rechtwinklig zur Belastungsrichtung 51 ausdehnt und das vorhandene Spiel 32' ausnutzt (siehe gestrichelte Linie 60) . Hierzu ist anzumerken, daß das Spiel 32' natürlich auch symmetrisch ausgebildet sein könnte. Zusätzlich verformen sich jedoch auch die Einbuchtungen 54 und 55 zur Bodenfläche 24 hin (siehe gestrichelte Linien 62, 63). Dadurch, daß der Elastomer-Werkstoff zumindestens teilweise in die, durch die Dichtringoberfläche 52 über der Bodenfläche 24 gebildeten Hohlräume 54, 55 einfließt, wird natürlich die radiale Ausdehnung des Dichtrings 50 stark verringert, so daß selbst bei zu kleinem radialen Spiel 32', keine zu großen Spannungen im Dichtkörper 50 auftreten. Es ist wichtig anzumerken, daß im verformten Zustand die Einbuchtungen 54 und 55 noch konvex ausgebildet sind. Somit entstehen im Bereich der Einbuchtungen 54 und 55 keine wesentlichen Zugspannungen. Die Scherkräfte zwischen Dichtring und Bodenfläche 24 des Kanals 22 werden ebenfalls stark verringert. Weiterhin ist festgestellt worden, daß die Verformung der konvexen, freiliegenden Dichtfläche 56, zu keinen Spannungskonzentrationen an den vorgenannten, kritischen Stellen 101, 102 und 103 führt (siehe Figur 1). Die errechneten Spannungen an den genannten Stellen sind dabei um mehr als 50 % in Bezug auf den Dichtring 10 reduziert.

Es hat sich als vorteilhaft erwiesen die ringförmigen Schultern oder Rücksprünge 38' und 40' im Dichtring 50 so zu bemessen, daß sie stets dichtend an den ringförmigen Vorsprüngen 34, 36 anliegen. Somit wird verhindert, daß das Druckmedium, zum Beispiel Hochofengas, in einen der Hohlräume 54, 55 eindringen kann. Das Anpressen der ringförmigen Elemente, welche die Vorsprünge 34, 36 ausbilden, an die Schulterflächen 38' und 40' des Dichtrings 50, wirkt sich dabei nicht negativ auf die Spannungsverteilung im Dichtring 50 aus.

Im Vergleich zur Figur 2, zeigt Figur 3 eine Ausführung eines Hohlraums 110, zwischen einem Dichtring 112 und dem Kanal 22, der seinen Zweck kaum erfüllt. Die radiale Ausdehnung des Hohlraums 110 ist viel zu klein, damit eine freiliegende Fläche 114, die konvex ausgebildet ist, sich wesentlich in den Hohlraum 110 verformen kann. Zusätzlich entstehen an den Punkten 116 und 118 große Spannungskonzentrationen 120 und große Scherkräfte 122.

## Patentansprüche

1. Dichtring größeren Druckmessers aus einem Elastomer-Werkstoff für die Montage in einen ringförmigen, nach einer Seite offenen Kanal (22), der eine Bodenfläche (24) und zwei sich in radialer Richtung gegenüberliegende Seitenflächen (26, 28) als Umgrenzungsfläche aufweist, wobei der Dichtring (50) annähernd denselben Querschnitt wie der Kanal (22) hat und eine freiliegende Dichtfläche (56) aufweist, welche beim montierten Dichtring (50) der offenen Seite des Kanals (22) zugekehrt ist und annähernd senkrecht, flächig zu belasten ist, **dadurch gekennzeichnet,** daß der Querschnitt des Dichtrings (50) gegenüber dem Querschnitt des Kanals so abgeändert ist, daß er einen zentralen Fuß (53) ausbildet der an die Bodenfläche (24) des Kanals (22) anliegend ist und der in radialer Richtung durch zwei konkave Einbuchtungen (54, 55) begrenzt wird, wobei diese konkave Einbuchtungen (54, 55) sich in radialer jeweils von der Bodenfläche (24) bis zu einer der beiden Seitenflächen (26, 28) erstrecken und derart bemessen sind, daß sie mit den entsprechenden Umgrenzungsflächen (24, 26) (24, 28) des Kanals jeweils einen Hohlraum im Kanal (22) ausbilden, in welchen ein wesentlicher Teil des Elastomer-Werkstoffs bei Belastung der freiliegenden Dichtfläche (56) ausweichen kann, ohne daß dabei die konkave Ausbildung der Einbuchtungen (54, 55) sich wesentlich verändert.

2. Dichtring nach Anspruch 1, dadurch gekennzeichnet, daß die konkave Einbuchtungen (54, 55) kreisbogenförmig ausgebildet sind.

3. Dichtring nach Anspruch 1 oder 2, dadurch gekennzeichnet, daß im unbelasteten Zustand, der Dichtring (50) sich im rechten Winkel von der Bodenfläche (24) des Kanals (22) abhebt, die konkave Einbuchtungen (54, 55) ausbildet und sich im rechten Winkel an die jeweilige Seitenfläche (26, 28) des Kanals (22) anlegt.

4. Dichtring nach einem der Ansprüche 1 bis 3, dadurch gekennzeichnet, daß die freiliegende Dichtfläche (56) als konvexe Fläche ausgebildet ist, welche eine ebene Scheitelfläche (57) als Kontaktfläche für den Dichtwulst (14) aufweist.

5. Dichtring nach einem der Ansprüche 1 bis 4, gekennzeichnet durch zwei seitliche, ringförmige, nach der offenen Seite des Kanals (22) zugekehrte Rücksprünge (38', 40'), welche beim montierten Dichtring dichtend an entsprechenden radialen, ringförmigen Vorsprüngen (34, 36) der Seitenflächen (26, 28) des Kanals (22) anliegen.

## Claims

1. Large-diameter sealing ring made from an elastomer material for assembly in an annular duct (22) open to one side, which has a bottom surface (24) and two lateral surfaces (26, 28) opposite each other in a radial direction as the limiting surfaces, the sealing ring (50) having approximately the same cross-section as the duct (22) and an exposed sealing face (56), which faces the open side of the duct (22) when the sealing ring (50) is assembled and can be loaded on its surface approximately at right angles, **characterised** in that the cross-section of the sealing ring (50) is modified in comparison with the cross-section of the duct in such a way that it forms a central base (53), which rests against the bottom surface (24) of the duct (22) and is limited in the radial direction by two concave recesses (54, 55), which extend radially from the bottom surface (24) to one of the two lateral surfaces (26, 28) and are dimensioned in such a way that they form with the corresponding limiting surfaces (24, 26) (24, 28) of the duct a cavity in the duct (22), into which a substantial part of the elastomer material can be displaced when the exposed sealing face (56) is under load without any significant change in the concave design of the recesses (54, 55).

2. Sealing ring according to claim 1, characterised in that the concave recesses (54, 55) are circular in shape.

3. Sealing ring according to claim 1 or 2, characterised in that the sealing ring (50) rises at right angles from the bottom surface (24) of the duct (22) when not under load, forms the concave recesses (54, 55) and rests at right angles against the respective lateral surface (26, 28) of the duct (22).

4. Sealing ring according to one of claims 1 to 3, characterised in that the exposed sealing face (56) is designed as a convex surface, which has a flat apex (57) as the contact face for the sealing bead (14).

5. Sealing ring according to one of claims 1 to 4, characterised by two lateral annular shoulders (38', 40') facing the open side of the duct (22), which rest tightly against corresponding radial, annular projections (34, 36) of the lateral surfaces (26, 28) when the sealing ring is assembled.

## Revendications

1. Bague d'étanchéité de grand diamètre formée d'une matière élastomère pour le montage dans un canal (22) annulaire ouvert sur un côté qui comprend, en tant que surfaces de délimitation, une surface de fond (24) et deux surfaces latérales (26, 28) qui sont situées l'une en face de l'autre dans la direction radiale, la bague d'étanchéité (50) ayant à peu près la même section transversale que le canal (22) et étant pourvue d'une surface d'étanchéité (56) dégagée qui, lorsque la bague d'étanchéité (50) est montée, est tournée vers le côté ouvert du canal (22) et soumise à une pression quasi verticale, caractérisée en ce que la section transversale de la bague d'étanchéité (50) est modifiée par rapport à la section transversale du canal de manière à former un pied central (53) qui est contigu à la surface de fond (24) du canal (22) et est limité, dans la direction radiale, par deux enfoncements concaves (54, 55), ces enfoncements concaves (54, 55) s'étendant à chaque fois, dans le sens radial, de la surface de fond (24) jusqu'à une des deux surfaces latérales (26, 28) et étant dimensionnés de manière à former à chaque fois, avec les surfaces de délimitation (24, 26), (24, 28) correspondantes du canal, un espace creux dans le canal (22), dans lequel une partie considérable de la matière élastomère peut se dégager lorsque la surface d'étanchéité (56) dégagée est soumise à une charge, sans que la forme concave des enfoncements (54, 55) s'en trouve sensiblement modifiée.

2. Bague d'étanchéité selon la revendication 1, caractérisée en ce que les enfoncements concaves (54, 55) ont une forme en arc de cercle.

3. Bague d'étanchéité selon la revendication 1 ou 2, caractérisée en ce que, à l'état non chargé, la bague d'étanchéité (50) s'élève à angle droit depuis la surface de fond (24) du canal (22), forme les enfoncements concaves (54, 55) et s'applique à angle droit contre la surface latérale respective (26, 28) du canal (22).

4. Bague d'étanchéité selon l'une des revendications 1 à 3, caractérisée en ce que la surface d'étanchéité dégagée (56) est exécutée en tant que surface convexe qui est pourvue d'une surface de sommet (57) plane en tant que surface de contact pour le bourrelet d'étanchéité (14).

5. Bague d'étanchéité selon l'une des revendications 1 à 4, caractérisée par deux parties en retrait (38', 40') latérales annulaires tournées vers le côté ouvert du canal (22), qui sont en contact étanche avec des saillies (34, 36) annulaires radiales correspondantes des surfaces latérales (26, 28) du canal (22) lorsque la bague d'étanchéité est montée.
